(19) Europäisches Patentamt
European Patent Office
Office européen des brevets

(11) **EP 3 301 455 A2**

(12) **EUROPEAN PATENT APPLICATION**

(43) Date of publication:
04.04.2018 Bulletin 2018/14

(51) Int Cl.:
*G01P 3/488* (2006.01)    *G01P 3/489* (2006.01)
*G01M 13/02* (2006.01)

(21) Application number: 17192461.6

(22) Date of filing: 21.09.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 29.09.2016 JP 2016192120

(71) Applicant: TOYOTA JIDOSHA KABUSHIKI
KAISHA
Toyota-shi, Aichi-ken, 471-8571 (JP)

(72) Inventor: HOJO, Katsuyuki
TOYOTA-SHI, AICHI-KEN, 471-8571 (JP)

(74) Representative: Intès, Didier Gérard André et al
Cabinet Beau de Loménie
158 rue de l'Université
75340 Paris Cedex 07 (FR)

(54) **ANGULAR VELOCITY MEASURING DEVICE AND RELATIVE ANGULAR VELOCITY MEASURING DEVICE**

(57)    An angular velocity measuring device (10) measures an angular velocity of a gear (100) that is fixed to a rotary shaft (101). The angular velocity measuring device (10) includes a pair of magnetic sensors (11, 12) that are arranged at positions facing a tooth flank (112) of the gear and that detect a shape of the tooth flank in a noncontact manner, and a computation unit (15) that is configured to generate a waveform obtained by synthesizing output detection signals of the pair of the magnetic sensors with each other and output an output waveform and calculate the angular velocity of the gear from the output waveform. The magnetic sensors are arranged such that the output detection signals are offset from each other by {(n-1)+(1/6)} pitches when one pitch is defined as one cycle of the shape of the tooth flank in a circumferential direction of the gear.

FIG. 1

EP 3 301 455 A2

# FIG. 4A

**Description**

BACKGROUND OF THE INVENTION

1. Field of the Invention

The invention relates to an angular velocity measuring device and a relative angular velocity measuring device that accurately measure a rotational speed of a gear.

2. Description of Related Art

A rotational speed of a gear is measured after appropriately selecting one among various measurement methods such as a method utilizing a rotary encoder, a method utilizing a photo interrupter, a method utilizing a magnetic sensor, and the like.

In measuring a rotational speed of a gear that is mounted in a real machine such as a vehicle or the like, according to the measurement method utilizing the rotary encoder, the rotary encoder needs to be directly installed on a rotary shaft, so the space for installation is limited. Besides, in the case of the real machine, the installation itself of the rotary encoder in a measurable manner in a structure with a measured object in rotation is difficult. According to the measurement method utilizing the photo interrupter, a light path needs to be ensured, and the place for installation is limited due to the great influence of the environment. According to the measurement method utilizing the magnetic sensor, the problems caused by the measurement methods utilizing the rotary encoder and the photo interrupter are not serious. Therefore, the measurement method utilizing the magnetic sensor is suited to measure the rotational speed of the mounted gear.

This measurement method for measuring the rotational speed is configured to acquire 0/1 signals each indicating whether or not a sensor signal exceeds a certain threshold, and calculate the rotational speed by counting the number of 0/1 signals. Therefore, changes in speed among the acquired sensor signals cannot be grasped with high resolution capability.

Thus, Patent No. 3016656 discloses an angular velocity measuring device that can realize accurate acquisition of a rotational speed of a gear in a manner enabling measurement with high resolution capability and accurately grasp rotational positions of meshing teeth of the gear, through the use of a sinusoidal sensor signal in a measurement method utilizing a magnetic sensor.

SUMMARY OF THE INVENTION

The angular velocity measuring device described in this Patent No. 3016656 acquires an output waveform of a noiseless sinusoidal sensor signal, and realizes accurate calculation of fluctuations in the rotational speed from a phase waveform of the output waveform (a sinusoidal waveform), in the case of a gear having sinusoidal tooth flanks.

However, in the angular velocity measuring device described in Japanese Patent No. 3016656 (JP 3016656 B), a sensor signal corresponding to the tooth flank shape of the gear as a measured object is output from the magnetic sensor. Thus, in the case where the measured object is a gear whose tooth flank shape is not precisely sinusoidal, a sensor signal including noise corresponding to the tooth flank shape, concretely, harmonic components is output. As a result, it is difficult to accurately calculate fluctuations in the rotational speed. Then, the relative angular velocity of gears that are mounted to mesh with each other cannot be accurately measured. For example, it is difficult to accurately acquire movements of tooth flanks of the gears into/out of contact with each other, and carry out an adjustment for reducing tooth hammering noise etc.

Incidentally, as will be described later, this problem is also caused in a similar manner in the angular velocity measuring device according to the measurement method utilizing the photo interrupter, in the case of a gear that does not have a precisely sinusoidal tooth flank shape.

The invention provides an angular velocity measuring device and a relative angular velocity measuring device that can accurately acquire fluctuations in angular velocity, also in a gear that does not have sinusoidal tooth flanks.

In one aspect of the invention, an angular velocity measuring device is configured to measure an angular velocity of a gear that is fixed to a rotary shaft. The angular velocity measuring device is equipped with a pair of a first noncontact sensor and a second noncontact sensor that are configured to be arranged at positions facing a tooth flank of the gear and to detect a shape of the tooth flank in a noncontact manner, and a computation unit that is configured to generate a waveform of a phase obtained by synthesizing output detection signals of the first noncontact sensor and the second noncontact sensor, output an output waveform, and calculate the angular velocity of the gear from the output waveform. The first noncontact sensor and the second noncontact sensor are arranged such that the output detection signals are offset from each other by $\{(n-1)+(1/6)\}$ pitches when one pitch is defined as one cycle of the shape of the tooth flank in the circumferential direction of the gear and n denotes a natural number.

As described hitherto, according to the aspect of the invention, the first noncontact sensor and the second noncontact sensor are arranged such that the output detection signals that have output waveforms corresponding to the shape of the tooth flank of the gear are offset from each other by {(n-1)+(1/6)} pitches of the shape of the tooth flank of the gear as a measured object. That is, the first noncontact sensor and the second noncontact sensor are arranged at positions that are offset from each other by ($\pi/3$) phase in the phase waveforms of output signal waveforms thereof, from a position where their output detection signals overlap with each other. Therefore, output detection signals having phase waveforms corresponding to fluctuations in the circumferential direction of the gear, which result from rotation of the tooth flank of the gear, are superimposed on each other while being offset from each other by ($\pi/3$) phase, and are synthesized with each other.

At this time, the output detection signals from the first noncontact sensor and the second noncontact sensor include noise such as third-order harmonic components or the like, which is generated as a result of the fact that the shape of the tooth flank of the gear as a measured object is similar to a sinusoidal shape. In particular, the noise in the form of third-order harmonic components influences the accuracy in measuring the angular velocity. However, the respective output detection signals are synthesized with each other while being offset from each other by ($\pi/3$) phase. Thus, the intensity of the noise in the form of third-order harmonic components is reduced, and the output detection signals are output after being converted into a synthetic output waveform as a substantially sinusoidal high-quality phase waveform.

Accordingly, even in the case where the shape of the tooth flank of the gear as a measured object does not coincide with a sinusoidal shape, the rotational speed of the gear can be accurately calculated with high resolution capability, and fluctuations in the highly accurate rotational speed of the gear can be easily grasped, by analyzing a substantially sinusoidal output waveform obtained by synthesizing the output detection signals for detecting the shape of the tooth flank with each other. As a result, an angular velocity measuring device that can accurately acquire fluctuations in angular velocity even in a gear that does not have a sinusoidal tooth flank can be provided.

In the aspect of the invention, the gear may be configured as an involute gear.

In the aspect of the invention, the first noncontact sensor and the second noncontact sensor may be configured as magnetic sensors.

In the aspect of the invention, the magnetic sensors may be configured as eddy-current sensors, and the first noncontact sensor and the second noncontact sensor may be operated at different oscillating frequencies.

In the aspect of the invention, the first noncontact sensor and the second noncontact sensor may be arranged at positions that are offset from each other in a circumferential direction of the gear.

In the aspect of the invention, the first noncontact sensor and the second noncontact sensor may be arranged at positions that are offset from each other in a tooth width direction of the gear.

In the aspect of the invention, the first noncontact sensor and the second noncontact sensor may be arranged at positions that are offset from each other in a tooth width direction of the gear and on a straight line parallel to an axial direction of the rotary shaft in a case where the gear is a helical gear.

Besides, a relative angular velocity measuring device is equipped with at least two angular velocity measuring devices according to the aspect of the invention. The relative angular velocity measuring device is equipped with a relative angular velocity computing unit that is configured to measure angular velocities of a pair of the gears meshing with each other as measured by the angular velocity measuring devices respectively, and calculate a relative angular velocity between the gears. Therefore, the relative angular velocity measuring device that acquires the relative angular velocity of the gears that mesh with each other can be structured. For example, tooth hammering noise or the like that is generated when the teeth meshing with each other move into and out of contact with each other can be effectively and easily suppressed.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a view showing an angular velocity measuring device according to one of the embodiments of the invention, and is a conceptual view showing the general schematic configuration of the angular velocity measuring device;
FIG. 2 is a block diagram showing the configuration of a computation unit of the angular velocity measuring device;
FIG. 3A is a view illustrating the configuration of one magnetic sensor of the angular velocity measuring device, and is a layout diagram illustrating the arrangement of the magnetic sensor with respect to a gear;
FIG. 3B is a graph illustrating a sensor output of the magnetic sensor;
FIG. 4A is a view illustrating the configuration of a pair of magnetic sensors of the angular velocity measuring device, and is a layout diagram illustrating the arrangement of the pair of the magnetic sensors with respect to the gear;

FIG. 4B is a graph illustrating sensor outputs of the pair of the magnetic sensors;

FIG. 5A is a graph showing an output waveform model of the magnetic sensor at one base position of the angular velocity measuring device;

FIG. 5B is a graph showing an output waveform model of the magnetic sensor at the other offset position of the angular velocity measuring device;

FIG. 5C is a graph showing an output waveform at the time when respective sensor signals are synthesized with each other;

FIG. 6A is a graph showing harmonic components that are superimposed on a sensor signal of the magnetic sensor;

FIG. 6B is a graph showing an analysis result of the sensor signal of the magnetic sensor;

FIG. 7A is a graph showing harmonic components that are superimposed on sensor signals of the pair of the magnetic sensors that have not been synthesized with each other;

FIG. 7B is a graph showing harmonic components that are superimposed on a sensor signal that is obtained after synthesizing sensor signals of the pair of the magnetic sensors with each other;

FIG. 8A is a view showing an exemplary analysis result of a sensor signal of the magnetic sensor of the angular velocity measuring device, and is a graph showing timings of backlash resulting from fluctuations that are generated in a rotational direction of a pair of gears that rotate while meshing with each other;

FIG. 8B is a view showing an exemplary analysis result of a sensor signal of the magnetic sensor of the angular velocity measuring device, and is a graph showing a rotational torque in the case where tooth hammering occurs when the gears rotate;

FIG. 9 is a functional block diagram illustrating an analysis process of a sensor signal of the magnetic sensor of the angular velocity measuring device;

FIG. 10 is a functional block diagram differing from FIG. 9 and illustrating an analysis process of a sensor signal of the magnetic sensor of the angular velocity measuring device;

FIG. 11 is a functional block diagram differing from FIGS. 9 and 10 and illustrating an analysis process of a sensor signal of the magnetic sensor of the angular velocity measuring device;

FIG. 12 includes waveform charts illustrating an analysis process of a sensor signal of the magnetic sensor of the angular velocity measuring device;

FIG. 13 includes waveform charts illustrating a process of obtaining a rotational speed of the gear from an analysis result of a sensor signal of the magnetic sensor of the angular velocity measuring device;

FIG. 14 is a view showing a relative angular velocity measuring device according to one of the embodiments of the invention that is equipped with two angular velocity measuring devices, and is a conceptual view showing the general schematic configuration of the relative angular velocity measuring device;

FIG. 15A is a view illustrating an angular velocity measuring device according to a first additional aspect of the invention, and is a layout diagram of magnetic sensors as viewed from an axial direction of a spur gear;

FIG. 15B is a layout diagram of the magnetic sensors with respect to a tooth flank of the spur gear in the first additional aspect of the invention;

FIG. 15C is a layout diagram of the magnetic sensors with respect to the tooth flank of the spur gear, and is a layout diagram different from FIG. 15B;

FIG. 16A is a view illustrating an angular velocity measuring device according to a second additional aspect of the invention, and is a layout diagram of magnetic sensors as viewed from an axial direction of a helical gear;

FIG. 16B is a layout diagram of the magnetic sensors with respect to a tooth flank of the helical gear; and

FIG. 17 is a view illustrating an angular velocity measuring device according to a third additional aspect of the invention, and is a conceptual view showing the general schematic configuration thereof.

DETAILED DESCRIPTION OF EMBODIMENTS

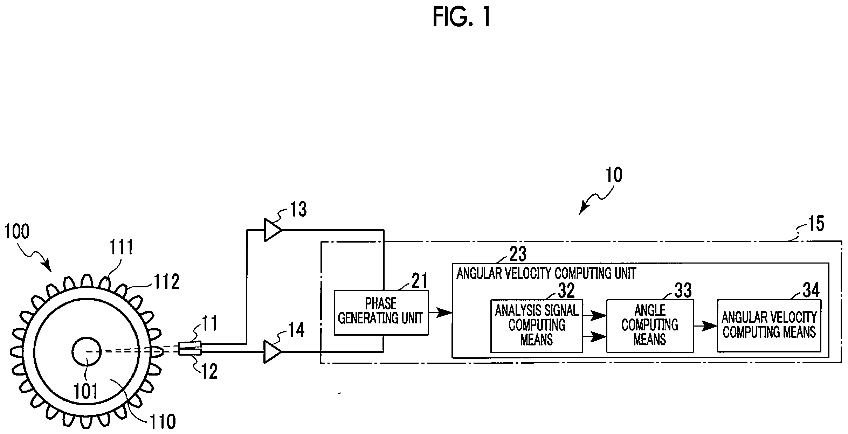

The embodiments of the invention will be described hereinafter in detail with reference to the drawings. FIGS. 1 to 13 are views showing an angular velocity measuring device according to one of the embodiments of the invention.

In FIG. 1, an angular velocity measuring device 10 is mounted in, for example, a vehicle, and is installed for the purpose of measuring a gear 100 that is incorporated in a motive power transmission mechanism that transmits motive power from a motive power source such as an internal combustion engine or the like, such as a transmission, a differential device or the like. Incidentally, this angular velocity measuring device 10 may be mounted in a real machine such as a vehicle or the like in a steadily usable manner, or can also be used by being temporarily installed in adjusting the setting.

It should be noted herein that the gear 100 is formed such that a body portion 110 and a plurality of meshing teeth 111 rotate integrally with a rotary shaft 101. The body portion 110 has the rotary shaft 101 fixed to a shaft center thereof, and assumes the shape of a circular disc, a circular column, or a circular cone. The plurality of the meshing teeth 111 are arranged on an outer peripheral surface of this body portion 110 successively in a circumferential direction around the rotary shaft 101. This gear 100 is rotatably supported by a vehicle side such that the rotary shaft 101 or the meshing teeth 111 receive the motive power transmitted from a motive power source of the vehicle and rotate in both a positive direction and a reverse direction or only in one of the directions.

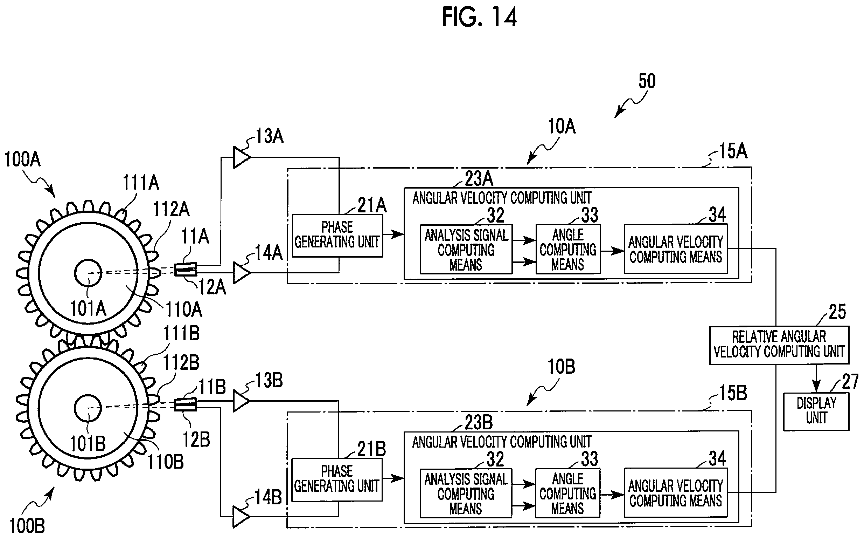

This gear 100 is an involute gear that is formed as follows. The meshing teeth 111 of this gear 100 and meshing teeth 111 of another gear 100 mesh with each other respectively, and tooth flanks 112 thereof are in press contact with each other respectively (see FIG. 14, which will be described later), such that motive power can be transmitted between the gears 100. Each of these tooth flanks 112 is formed such that an outer contour of a cross-section that is perpendicular to an axial direction, namely, a tooth flank shape coincides with an involute curve.

The angular velocity measuring device 10 is structured by being equipped with a pair of magnetic sensors 11 and 12, amplifiers 13 and 14 that are connected to these magnetic sensors 11 and 12 respectively, and a computation unit 15 that is connected such that outputs of these amplifiers 13 and 14 can be input thereto.

The magnetic sensors 11 and 12 are installed at opposite positions that face the tooth flanks 112 of the meshing teeth 111 of the gear 100 in a noncontact manner, respectively. Each of the magnetic sensors 11 and 12 is configured as an eddy-current sensor (a so-called eddy current-type displacement gauge) that outputs a sensor signal (an output detection signal) that changes in accordance with the tooth flank shape of the tooth flanks 112. That is, the magnetic sensors 11 and 12 constitute a pair of a first noncontact sensor and a second noncontact sensor that detect the tooth flank shape of the gear 100 in a noncontact manner, and detect fluctuations in the tooth flank shape in the circumferential direction that result from rotation of the gear 100.

Incidentally, as will be described later, these magnetic sensors 11 and 12 configured as eddy-current sensors are installed at positions close to each other. Therefore, eddy-current sensors that operate at different oscillating frequencies are selected and installed as the magnetic sensors 11 and 12, so as to prevent noise components from being generated due to the occurrence of interference. As will be described later, these magnetic sensors 11 and 12 superimpose output sensor signals on each other and synthesize them with each other. Thus, the output characteristics of the magnetic sensors 11 and 12 are equalized with each other, and the magnetic sensors 11 and 12 are installed at positions that are equally spaced apart from the gear 100 as a measured object. Besides, these magnetic sensors 11 and 12 are not required to be eddy-current sensors. Magnetic sensors such as magnetoresistive sensors, electromagnetic pickup sensors or the like may be selected and installed as the magnetic sensors 11 and 12.

The amplifiers 13 and 14 amplify the outputs of sensor signals of the magnetic sensors 11 and 12 in such a manner as to enable post-processing.

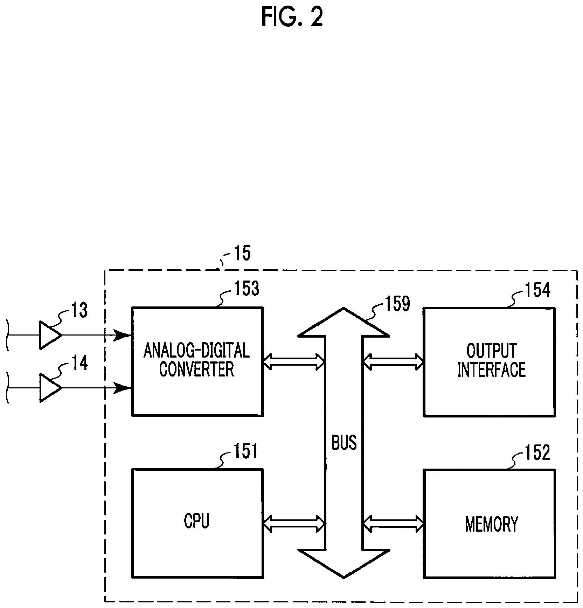

As shown in FIG. 2, the computation unit 15 is structured such that a central processing unit (a CPU) 151, a memory 152, an analog-digital converter (an A/D converter) 153, and an outer interface 154 are connected to one another via a bus 159 in such a manner as to enable exchange of various information signals. This computation unit 15 acquires sensor signals of the magnetic sensors 11 and 12 that can be subjected to a computation process via the amplifiers 13 and 14 and the A/D converter 153, and performs the computation process based on various parameters and the like in accordance with a computation program stored in advance into the memory 152 by the CPU 151. Thus, the computation unit 15 functions as a phase generating unit 21, an angular velocity computing unit 23 and the like, which will be described later, and calculates a desired computation result.

As will be described later, the magnetic sensors 11 and 12 of this angular velocity measuring device 10 are arranged in an offset manner at shift positions that are offset from each other in a rotational direction of the rotary shaft 101, such that the computation unit 15 can synthesize sensor signals of the magnetic sensors 11 and 12 with each other and output them in a sinusoidal waveform with a small quantity of noise such as harmonic components or the like superimposed thereon, as sensor signals to be delivered to the computation unit 15.

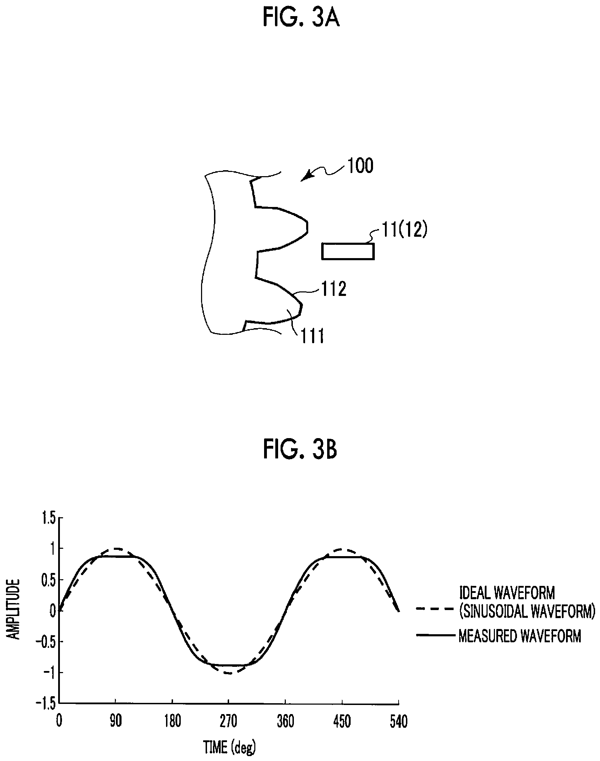

In concrete terms, as shown in FIG. 3A, each of the magnetic sensors 11 and 12 faces the tooth flank 112 of each of the meshing teeth 111 of the gear 100 in a noncontact manner, and detects the tooth flank shape (fluctuations in the circumferential direction) of the rotating tooth flank in a tracing manner. Thus, as shown in FIG. 3B, each of the magnetic sensors 11 and 12 outputs a sensor signal having a phase waveform (a signal waveform) similar to a sinusoidal waveform.

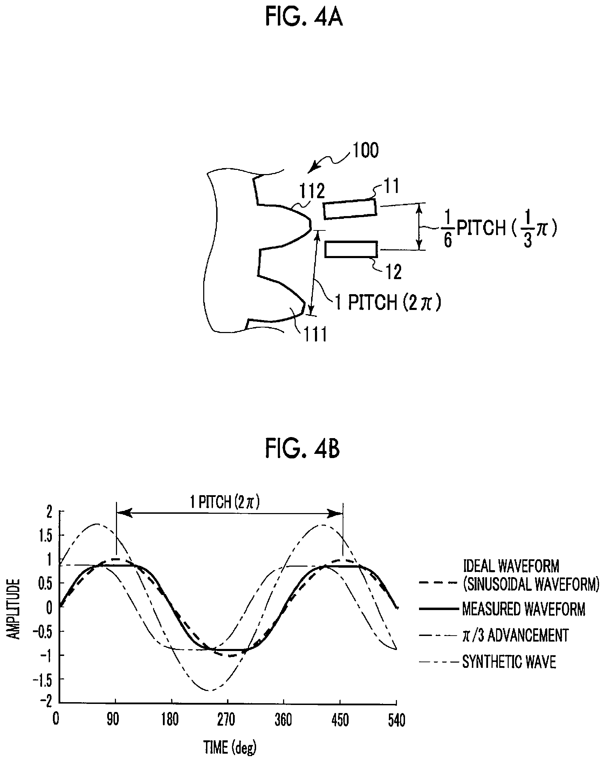

As shown in FIG. 4A, these magnetic sensors 11 and 12 are installed at shift positions that are offset from each other by 1/6 pitch in the circumferential direction of the gear 100, when one pitch is defined as one cycle of the tooth flank shape rotating in the circumferential direction of the tooth flanks 112 of the meshing teeth 111 of the gear 100. In other words, the magnetic sensors 11 and 12 are installed at shift positions that are offset in phase waveform from each other in a rotational circumferential direction of the rotary shaft 101 by $\pi/3$ phases. As shown in FIG. 4B, an output waveform obtained by synthesizing sensor signals of the magnetic sensors 11 and 12 thus laid out with each other is synthesized while being offset in the rotational circumferential direction by $\pi/3$ phases.

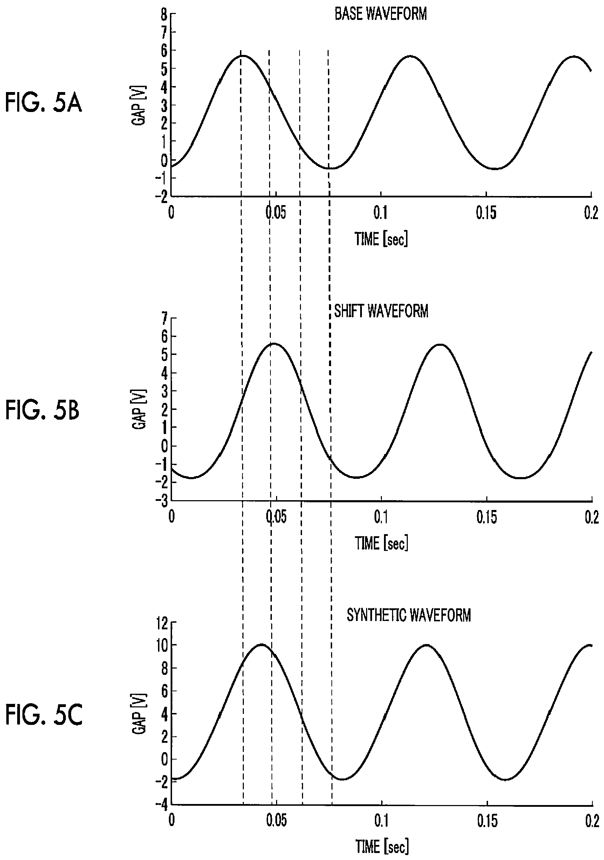

Thus, an output waveform model of a sensor signal of the magnetic sensor 11 at a base position shown in FIG. 5A and an output waveform model of a sensor signal of the magnetic sensor 12 at a shift position of 1/6 pitch ($\pi/3$ phases) shown in FIG. 5B are synthesized with each other, and are output as a highly accurate synthesized waveform as a substantially sinusoidal waveform as shown in FIG. 5C.

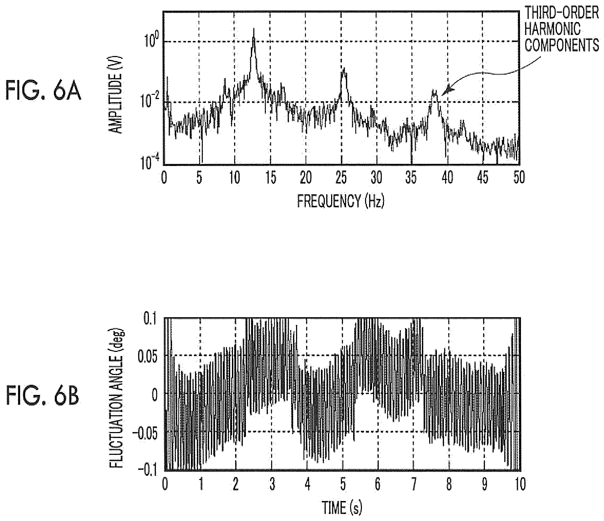

By the way, the tooth flanks 112 of the meshing teeth 111 of the gear 100 as a measured object are formed in the tooth flank shape corresponding to an involute curve. Therefore, as described above, the individual sensor signals of these magnetic sensors 11 and 12 are acquired as waveforms similar to sinusoidal waves. However, each of these sensor signals assumes a waveform corresponding to the tooth flank shape of a circumferential outer peripheral surface including each of the tooth flanks 112 of the meshing teeth 111 of the gear 100. Thus, as shown in FIG. 6A, third-order harmonic components are superimposed on each of these sensor signals due to the influence of the shapes of tooth tips of the meshing teeth 111, tooth roots of the meshing teeth 111, and flat portions among the tooth roots.

Therefore, even when a later-described computation process is performed to analyze each of sensor signals of these magnetic sensors 11 and 12, waveform data in which noise components resulting from a strain of each of the sensor signals appear are obtained, and the angle resolution capability deteriorates, as shown in FIG. 6B. Then, fluctuations in the circumferential direction that result from rotation of the tooth flanks 112 of the meshing teeth 111 of the gear 100 are embedded in noise. As a result, for example, the timings of fluctuations to the extent of the occurrence of a tooth hammering phenomenon cannot be grasped. This problem causes a trouble in terms of accuracy, because an analysis process becomes complicated due to the necessity for the setting of a filter that is synchronized with a rotational speed in the case where the rotational speed changes, and a transient phenomenon is also removed by the filter, although apparent noise components can be reduced by subjecting the waveform data to a filtering process.

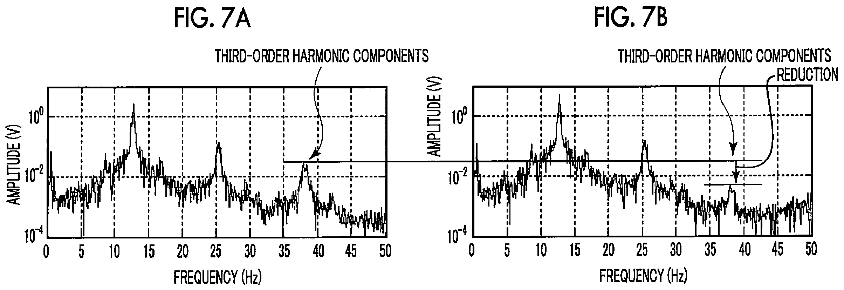

In contrast, with the magnetic sensors 11 and 12 laid out at shift positions that are offset from each other in the rotational circumferential direction by 1/6 pitch, namely, $\pi/3$ phases as in the present embodiment of the invention, third-order harmonic components (noise) superimposed on phase data shown in FIG. 7A can be canceled by superimposing the sensor signals on each other and synthesizing them with each other. Thus, with the synthetic waveform of the magnetic sensors 11 and 12, the amplitude intensity of the third-order harmonic components can be significantly reduced as shown in FIG. 7B.

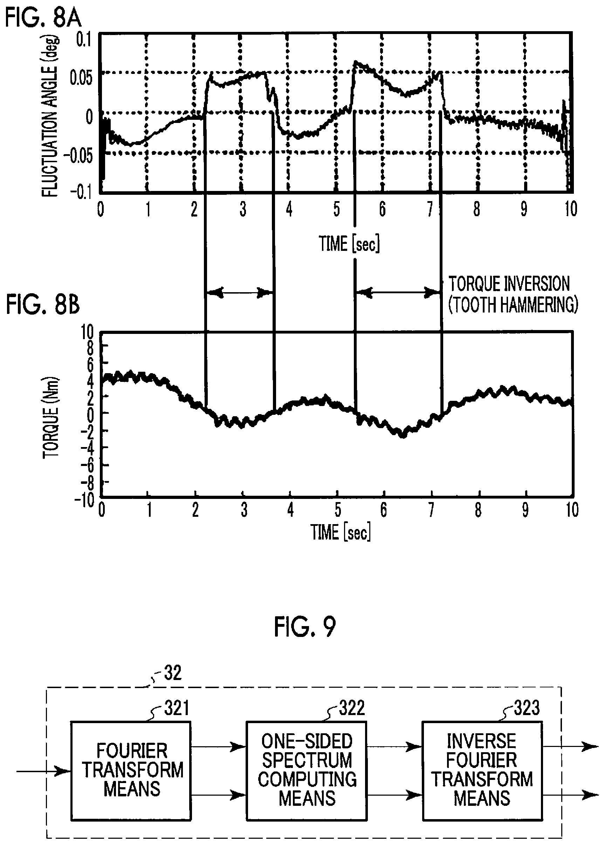

Therefore, the angular velocity measuring device 10 can realize the measurement of the angular velocity of the gear 100 with high angle resolution capability, by synthesizing two sensor signals of the magnetic sensors 11 and 12 with each other and analyzing a synthetic sensor signal through the performance of the computation process that will be described later. For example, as shown in FIG. 8A, backlash can be extracted by actualizing fluctuations in the circumferential direction that result from rotation of the tooth flanks 112 of the meshing teeth 111 of the gear 100. It is possible to grasp that the rotation of the gear 100 fluctuates at timings when the tooth hammering phenomenon occurs upon torque inversion shown in FIG. 8B.

Specifically, returning to FIG. 1, the computation unit 15 of the angular velocity measuring device 10 is equipped with the phase generating unit 21 and the angular velocity computing unit 23 as described above. The phase generating unit 21 cancels third-order harmonic components by receiving sensor signals of the magnetic sensors 11 and 12 via the amplifiers 13 and 14 and synthesizing the sensor signals with each other, generates a synthetic waveform as a substantially sinusoidal waveform from a phase waveform corresponding to the tooth flank shape of the gear 100, and outputs the synthetic waveform. The angular velocity computing unit 23 analyzes an output waveform of the phase generating unit 21, and calculates an angular velocity of the gear 100.

The angular velocity computing unit 23 is constituted of analysis signal computing means 32, angle computing means 33, and angular velocity computing means 34. The analysis signal computing means 32 calculates a real part analysis signal and an imaginary part analysis signal that form a Hilbert transform pair, by processing an output of the phase generating unit 21. The angle computing means 33 calculates an angle formed by the real part analysis signal and the imaginary part analysis signal, based on a ratio between the real part analysis signal and the imaginary part analysis signal, which have been computed by this analysis signal computing means 32. The angular velocity computing means 34 computes a time-derivative value of the angle computed by this angle computing means 33, and calculates an angular velocity.

As shown in FIG. 9, the analysis signal computing means 32 is constituted of Fourier transform means 321, one-sided spectrum computing means 322, and inverse Fourier transform means 323. The Fourier transform means 321 subjects the output of the phase generating unit 21 to complex Fourier transform, and calculates a real frequency component and an imaginary frequency component. The one-sided spectrum computing means 322 sets a negative frequency range of the real frequency component and the imaginary frequency component, which have been calculated by this Fourier transform means 321, to zero, doubles the value of a positive frequency range thereof, and calculates a one-sided real frequency component and a one-sided imaginary frequency component. The inverse Fourier transform means 323 outputs a real part analysis signal and an imaginary part analysis signal that form a Hilbert transform pair by subjecting the one-sided real frequency component and the one-sided imaginary frequency component, which have been calculated by this one-sided spectrum computing means 322, to inverse Fourier transform.

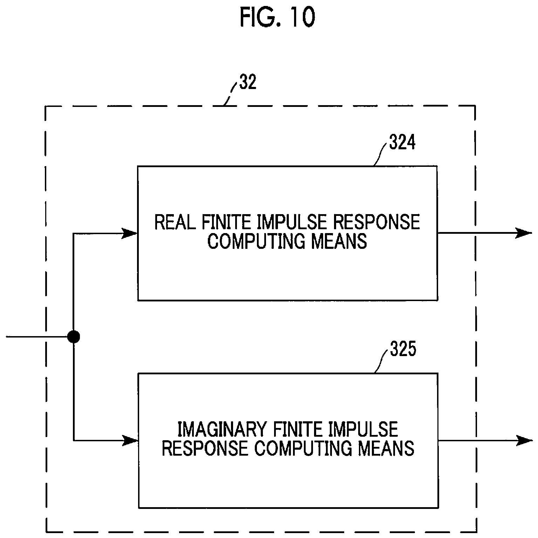

Besides, as shown in FIG. 10, the analysis signal computing means 32 is constituted of real finite impulse response computing means 324 and imaginary finite impulse response computing means 325. The real finite impulse response computing means 324 computes a convolutional product-sum of the output of the phase generating unit 21 and a real finite impulse response filter, and outputs a real part analysis signal. The imaginary finite impulse response computing means 325 computes a convolutional product-sum of the output of the phase generating unit 21 and an imaginary finite impulse response filter, and outputs an imaginary part analysis signal.

Thus, two analysis signals that are perpendicular to each other can be obtained by subjecting a sinusoidal wave signal of a synthetic waveform output from the phase generating unit 21 to an analysis process. In the case where these two analysis signals that are perpendicular to each other are regarded as a real axis component and an imaginary axis component of a virtual vector of a sensor output signal, the angle formed by this virtual vector with respect to a real axis is proportional to the displacement of the measured object. Therefore, the angular velocity of the measured object can be measured by time-differentiating this angle.

Then, as described above, the synthetic waveform of the magnetic sensors 11 and 12 output by the phase generating unit 21 is acquired by the angular velocity computing unit 23 as a one-cycle sinusoidal voltage waveform that is induced every time one of the meshing teeth 111 of the gear 100 passes from its opposite position. Thus, the angular velocity computing unit 23 can acquire a sinusoidal output waveform that is proportional to each rotational speed of the gear 100. For example, the angular velocity computing unit 23 can acquire the frequency of the output waveform as a rotational frequency of the gear 100, and can acquire a rotational speed of the gear 100 at a specific moment from the output waveform.

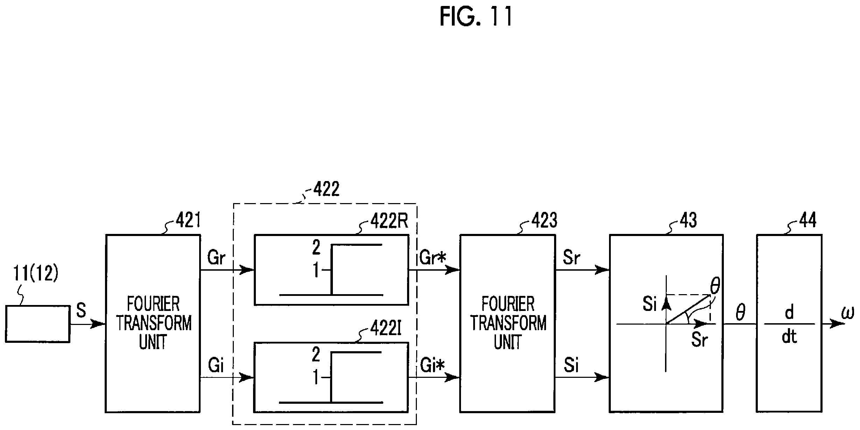

The CPU 151 of this computation unit 15 shown in FIG. 2 calculates an angular velocity of the gear 100 by acquiring sensor signals of the magnetic sensors 11 and 12 in accordance with the computation program in the memory 152 on a predetermined sampling cycle and carrying out an analysis process that will be described later. Incidentally, the sampling cycle for carrying out this analysis process is sufficiently shorter than one cycle of a sinusoidal wave as a synthetic waveform of the magnetic sensors 11 and 12, and is generally set to, for example, about one-tenth thereof. The synthetic waveform of the magnetic sensors 11 and 12 thus acquired by the computation unit 15 is amplified, subjected to A/D conversion, and then subjected to a signal process shown in a functional block diagram of FIG. 11.

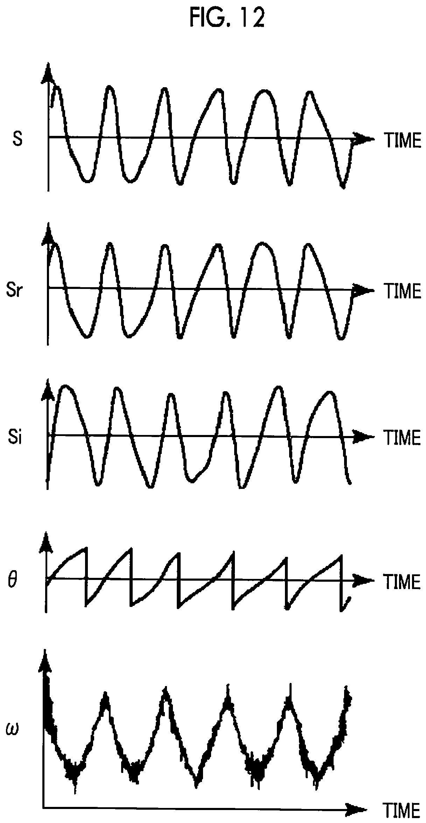

Specifically, FIG. 12 is a waveform diagram of respective portions that are processed by angular velocity measuring devices 10A and 10B, and the axis of abscissa and the axis of ordinate represent time and amplitudes of respective waveforms, respectively. It is assumed that a sinusoidal signal as indicated by S(t) in FIG. 12 is obtained as an output of the phase generating unit 21. That is, when $\theta$ denotes a rotational angle of the gear 100, an equation (1) shown below is fulfilled.

$$S(t) = \sin(\theta/Z) \dots (1)$$

It should be noted, however, that the amplitude is normalized to 1.

This analog signal S(t) is sent to each computation unit 15, subjected to A/D conversion, and processed into a digital signal. That is, N signals S(nT) ($0 \leq n \leq$ N-1) sampled at a time interval T are derived by a Fourier transform unit 421 shown in FIG. 11, and a complex spectrum G with a real part Gr and an imaginary part Gi is obtained based on equations (2) to (4) shown below.

$$G(k) = Gr(k) + jGi(k) \dots (2)$$

$$Gr(k) = \sum_{n=1}^{N-1} S(n) \cdot \cos\left(\frac{2\pi nk}{N}\right) \quad \dots (3)$$

$$Gi(k) = \sum_{n=1}^{N-1} S(n) \cdot \sin\left(\frac{2\pi nk}{N}\right) \quad \dots (4)$$

It should be noted, however, that N denotes a positive integer as a sampling numeral used for an analysis (which is referred to as an observation window length), that n denotes a positive integer as a sampling number that satisfies $0 \leq n \leq$ N-1, and that k denotes a number assigned to a frequency discretized individually for $\Delta f$. That is, ($2\pi nk/N$) denotes a discretized rotational angle.

This complex spectrum is derived by a one-sided spectrum computing unit 422 shown in FIG. 11, and the following processes are performed individually for the real part Gr and the imaginary part Gi. (1) The spectrum of the negative frequency range is set to zero. (2) The spectrum of the positive frequency range is doubled. A real part and an imaginary part of a one-sided spectrum output through these processes are denoted by Gr* and Gi* respectively.

When the real part Gr* and the imaginary part Gi* of the one-sided spectrum are subjected to inverse Fourier transform by an inverse Fourier transform unit 423 shown in FIG. 11, a real part Sr and an imaginary part Si of mutually perpendicular analysis signals of an output S of the phase generating unit 21 shown in FIG. 12 are obtained. In the field of signal processes, the real part Sr and the imaginary part Si of these two analysis signals are assumed to form a Hilbert transform pair.

FIG. 12 shows waveforms of the real part Sr and the imaginary part Si of two analysis signals. When the real part Sr and the imaginary part Si of these analysis signals are expressed on a complex plane, a virtual vector V indicated by an equation (5) shown below is obtained.

$$V = Sr + j \cdot Si \dots (5)$$

Then, this virtual vector V forms an angle $\theta$ with a virtually assumed real axis. This angle $\theta$ is proportional to the rotational angle of the gear 100. That is, an angle computing unit 43 shown in FIG. 11 performs a computation according to an equation (6) shown below, so that the signals shown in FIG. 12 are obtained.

$$\theta = \arctan(Si/Sr) \dots (6)$$

When Z denotes the number of the meshing teeth 111 of the gear 100, the actual angle is equal to $(\theta/Z)$. An angular velocity computing unit 44 shown in FIG. 11 time-differentiates this angle, so an angular velocity $\omega$ of the gear 100 shown in FIG. 12 is computed.

$$\omega = (1/Z) \cdot (d\theta/dt) \dots (7)$$

Incidentally, when $\Delta\omega$ denotes a minimum detection accuracy of this angular velocity $\omega$, an equation (8) shown below is fulfilled.

$$\Delta\omega = \min(2\pi f) = 2\pi\Delta f = 2\pi(Zf/N) \dots (8)$$

Accordingly, the computation unit 15 can determine the detection accuracy by appropriately selecting the number Z of the meshing teeth 111 of the gear 100, and the sampling frequency f and the analysis window length N of a signal process. Each of the Fourier transform process, one-sided spectrum computing process, and inverse Fourier transform process in the computation unit 15 is a process in a frequency range. However, each of equivalent processes can also be performed in a time range.

That is, when S(n) denotes an output signal of the phase generating unit 21, hr(n) denotes an impulse response of the real finite impulse filter, hi(n) denotes an impulse response of an imaginary finite impulse filter, and n denotes a sample time point, the real part Sr and the imaginary part Si of the analysis signals can be calculated from equations (9) and (10) shown below.

$$Sr = S(n)*hr(n) \dots (9)$$

$$Si = S(n)*hi(n) \dots (10)$$

It should be noted herein that "*" denotes a convolutional product-sum (convolutional computation).

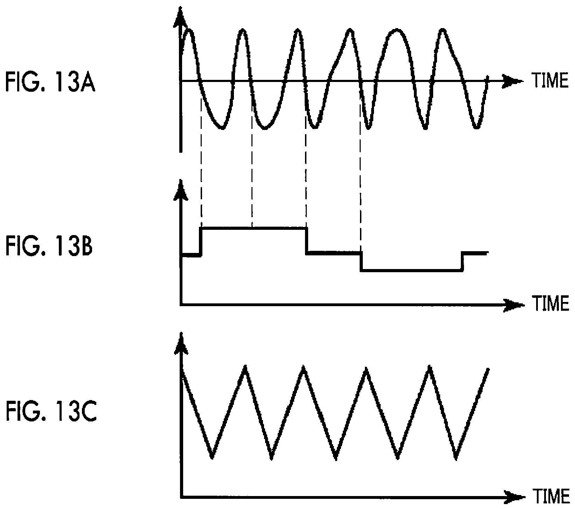

Incidentally, when a transfer function of a whole band pass filter is turned into a one-sided spectrum and subjected to complex inverse Fourier transform, the real finite impulse filter hr(n) can be obtained as the real part, and the imaginary finite impulse filter hi(n) can be obtained as the imaginary part. FIG. 13C is an illustrative view of a method of detecting a rotational speed. In FIG. 13C, speed signals are obtained by the computation unit 15. For example, speed signals can be successfully obtained even between a time point t0 and a time point t1, so the detection accuracy can be enhanced.

As described hitherto, in the angular velocity measuring device 10 according to the present embodiment of the invention, the magnetic sensors 11 and 12 that detect the tooth flank shape of the gear 100 are arranged at shift positions that are offset from each other by 1/6 pitch, namely, $\pi/3$ phases in the rotational circumferential direction. Thus, a synthetic waveform as a substantially sinusoidal waveform is obtained with third-order harmonic components included in these sensor signals canceled, and then an analysis computation can be carried out.

Thus, the angular velocity measuring device 10 can accurately calculate the angular velocity of the meshing teeth 111 of the gear 100 with high resolution capability. For example, as shown in FIG. 8B, fluctuations in the rotational speed of the gear 100 in which the tooth hammering phenomenon occurs can be output as a high-quality analysis waveform that can be easily grasped.

Accordingly, the angular velocity measuring device 10 can be effectively utilized for various control processes by, for example, providing high-resolution capability information on the rotational angular velocity of the measured gear 100 to a control device for a vehicle that is mounted with the angular velocity measuring device 10.

Next, FIG. 14 is a view showing a relative angular velocity measuring device according to one of the embodiments of the invention that is equipped with two angular velocity measuring devices according to the invention.

In FIG. 14, a relative angular velocity measuring device 50 is mounted in, for example, a vehicle and is installed for the purpose of measuring two gears 100A and 100B. The gears 100A and 100B are incorporated in a motive power transmission mechanism that transmits a motive power from a motive power source such as an internal combustion engine or the like, such as a transmission, a differential device or the like, and rotate while meshing with each other. This relative angular velocity measuring device 50 is structured by connecting a relative angle computing unit 25 to the two angular velocity measuring devices 10A and 10B according to the aforementioned embodiment of the invention, which are installed in such as manner as to be able to measure angular velocities of the gears 100A and 100B respectively. The relative angle computing unit 25 extracts fluctuations in the relative angular velocity of the gears 100A and 100B through the use of angular velocity information received from the angular velocity measuring devices 10A and 10B, and measures a meshing oscillation at the time of transmission of motive power by the two gears 100A and 100B, and the like.

It should be noted herein that the gears 100A and 100B have a plurality of meshing teeth 111 A and 111B that are successively arranged in a circumferential direction of body portions 110A and 110B, which are fixed to rotary shafts 101A and 101B, and that mesh with each other. One of each pair of these meshing teeth 111A and 111B actively rotates due to the motive power transmitted from the motive power source of the vehicle, and the other of each pair of the meshing teeth 111A and 111B, which meshes with one thereof, passively rotates. As a result, the motive power is transmitted.

The angular velocity measuring devices 10A and 10B are installed at such positions that two magnetic sensors 11A and 12A and two magnetic sensors 11B and 12B face, in a noncontact manner, tooth flanks 112A and 112B of the meshing teeth 111A and 111B of the gears 100A and 100B as measured objects, respectively. A computation unit 15A is connected to these magnetic sensors 11A and 12A via amplifiers 13A and 14A respectively. Besides, a computation unit 15B is connected to the magnetic sensors 11B and 12B via amplifiers 13B and 14B respectively.

The computation units 15A and 15B are equipped with phase generating units 21A and 21B and angular velocity computing units 23A and 23B, respectively. The phase generating units 21A and 21B receive sensor signals from the magnetic sensors 11A and 12A and the magnetic sensors 11B and 12B respectively, generate a synthetic waveform as a substantially sinusoidal waveform with third-order harmonic components canceled from phase waveforms corresponding to the tooth flank shapes of the gears 100A and 100B respectively, and output the synthetic waveform. The angular velocity computing units 23A and 23B analyze output waveforms corresponding to the tooth flank shapes of the gears 100A and 100B for these phase generating units 21A and 21B respectively, and calculate angular velocities of the gears 100A and 100B respectively.

These angular velocity computing units 23A and 23B are not shown in the drawings. However, as is the case with the aforementioned embodiment of the invention, each of the angular velocity computing units 23A and 23B is constituted of the analysis signal computing means 32, the angle computing means 33, and the angular velocity computing means 34. Among these means, the analysis signal computing means 32 is constituted of the Fourier transform means 321, the one-sided spectrum computing means 322, and the inverse Fourier transform means 323, and also is constituted of the real finite impulse response computing means 324 and the imaginary finite impulse response computing means 325.

Then, as is the case with the aforementioned embodiment of the invention, the angular velocity computing units 23A and 23B acquire sinusoidal voltage waveforms (synthetic output waveforms) proportional to the rotational speeds of the gears 100A and 100B that are output from the phase generating units 21A and 21B, respectively. The angular velocity measuring devices 10A and 10B then calculate rotational frequencies of the gears 100A and 100B, and rotational speeds of the gears 100A and 100B at specific timings, respectively.

At this time, as is the case with the aforementioned embodiment of the invention, the CPU 151 of each of the computation units 15A and 15B acquires a synthetic output waveform of each of the phase generating units 21A and 21B on a predetermined sampling cycle in accordance with the computation program in the memory 152, and performs the analysis process through the signal process shown in the functional block diagram of FIG. 11. Thus, angular velocities of the gears 100A and 100B are calculated. Furthermore, a relative angular velocity of the gears 100A and 100B is calculated.

By the way, the pair of the gears 100A and 100B preferably realize smooth and natural rotation through the setting for optimizing the gap between the tooth flanks 112A and 112B of the meshing teeth 111A and 111B that mesh with each other respectively, that is, a so-called backlash, in such a manner as to realize lossless delivery of the motive power transmitted from the motive power source. When the backlash is too small, interference is caused. That is, for example, the tooth flanks 112A and 112B scrape against each other while being in press contact with each other. Besides, the amount of friction increases due to an insufficient amount of lubricating oil resulting from the lack of a sufficient gap. On the contrary, when the backlash is too large, retroaction/rebound (which is also referred to as backlash) occurs, for example, when the transmitted torque fluctuates. As a result, interference occurs in the form of a collision between the tooth flanks 112A and 112B or the like, and tooth hammering noise is generated at the time of the collision. In short, when the backlash is insufficiently optimized, problems such as the occurrence of oscillation, the generation of abnormal noise, a transmission loss in motive power resulting from interference, the tendency to lead to breakage of the gears 100A and 100B, and the like are caused.

For this reason, it is effective to set the gears 100A and 100B that are incorporated in the motive power transmission mechanism mounted in the vehicle, such as the transmission, the differential device or the like, such that the occurrence of tooth hammering resulting from an inappropriate backlash or the like is suppressed as much as possible. Therefore, the relative angular velocity measuring device 50 realizes accurate measurement of the angular velocities of the gears 100A and 100B with high resolution capability through an analysis process of sensor signals excellent in S/N ratio by the two angular velocity measuring devices 10A and 10B. In addition, the relative angular velocity measuring device 50 makes it possible for the relative angle computing unit 25 to extract and grasp changes in the relative angular velocity through the use of high-quality information on the angular velocities of the gears 100A and 100B.

In concrete terms, the relative angle computing unit 25 of the relative angular velocity measuring device 50 can determine whether or not the gears 100A and 100B are set in such a state that the motive power can be transmitted with an optimal backlash, through the use of pieces of information on the angular velocities of the gears 100A and 100B that are output by the two angular velocity measuring devices 10A and 10B respectively.

As is the case with the angular velocity computing units 23A and 23B, the relative angle computing unit 25 is structured by a CPU, a memory and the like separately from the computation units 15A and 15B or together with one of the computation units 15A and 15B. In this relative angle computing unit 25, the CPU performs a computation process based on various parameters and the like in accordance with the computation program stored in advance in the memory. Thus, the relative angle computing unit 25 realizes the easy settings of the gears 100A and 100B by calculating angular velocities and a relative angular velocity of the respective gears 100A and 100B with high angle resolution capability, and displaying/outputting the calculated angular velocities and the calculated relative angular velocity on/to the display unit 27 or the like.

For example, the relative angle computing unit 25 is equipped with a liquid-crystal screen as the display unit 27, and displays/outputs changes in the angular velocities of the gears 100A and 100B within a certain period after digitalization thereof by average values, or displays/output the changes in the form of waveforms. Besides, the relative angle computing unit 25 displays/outputs changes in the difference between the angular velocities of the gears 100A and 100B within a certain period after digitalization by average values, or displays/outputs the changes in the form of a waveform. Furthermore, the relative angle computing unit 25 not only makes it possible to see a digitalized display of the average value of the difference between (the relative angular velocity of) the gears 100A and 100B, and to visually recognize meshing oscillation at the time of the transmission of motive power, the timings of the occurrence of tooth hammering and the like from the display of the waveform of changes in the difference, but may also determine and display/output whether or not the backlash is appropriate, through a comparison with a threshold.

Thus, an operator can easily grasp set states of the gears 100A and 100B by checking the display unit 27, and can carry out a fine adjustment or the like of the set states.

It should be noted herein that when the number of teeth of the gear 100A and the number of teeth of the gear 100B are different from each other, the tooth hammering behavior and the like may be made graspable with high accuracy through acquisition of relative retardation and relative advancement, by obtaining the difference after carrying out conversion into a peripheral speed per meshing.

Incidentally, the relative angle computing unit 25 not only makes it possible to perform the act of displaying/outputting by being equipped with the display unit 27, but may be equipped with, for example, a connection terminal that is connected to an external device, and cause the external device to carry out an analysis or the like.

As described hitherto, in addition to the operation and effect resulting from the aforementioned embodiment of the invention, the relative angular velocity measuring device 50 according to the present embodiment of the invention can acquire a relative angular velocity through the use of angular velocities of the gears 100A and 100B that are measured by the two angular velocity measuring devices 10A and 10B according to the aforementioned embodiment of the invention respectively. Thus, a setting operation or the like for effectively suppressing the generation of tooth hammering noise of the gears 100A and 100B can be easily carried out by, for example, easily grasping the magnitude of meshing oscillation, the presence or absence of tooth hammering and the like from the difference between the angular velocities, etc.

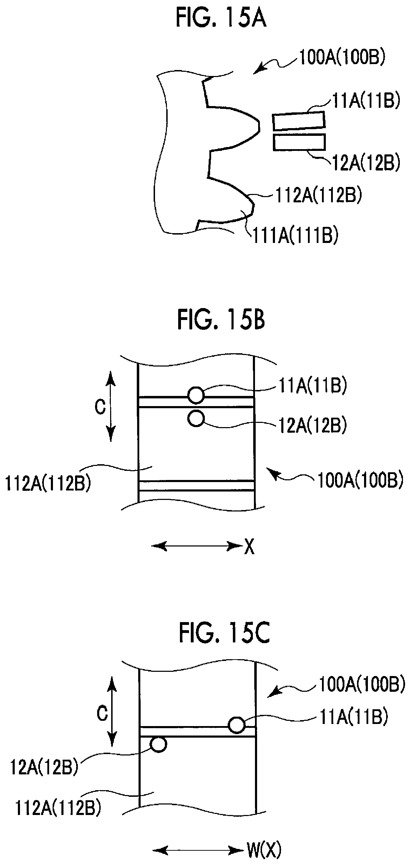

It should be noted herein that as a first additional aspect of the aforementioned embodiment of the invention, as shown in FIGS. 15A and 15B, the magnetic sensors 11 and 12 are installed successively in the circumferential direction at noncontact opposite positions close to the tooth flank 112 of each of the meshing teeth 111 of the gear 100 in the aforementioned embodiment of the invention, but the invention is not limited thereto. For example, in the case of a spur gear that is shaped such that the meshing teeth 111 of the gear 100 are extended parallel to an axial direction X of the rotary shaft 101, the magnetic sensors 11 and 12 sometimes cannot be installed at adjacent positions that are perpendicular to the axial direction of the rotary shaft 101 and that are successive to each other in a circumferential direction C, due to the small size of the gear 100, as shown in FIG. 15B. In this case, as shown in FIG. 15C, the magnetic sensors 11 and 12 may be arranged at shift positions that are offset from each other in a tooth width direction W of the gear 100. In this case as well, an operation and effect similar to those of the aforementioned embodiment of the invention can be obtained.

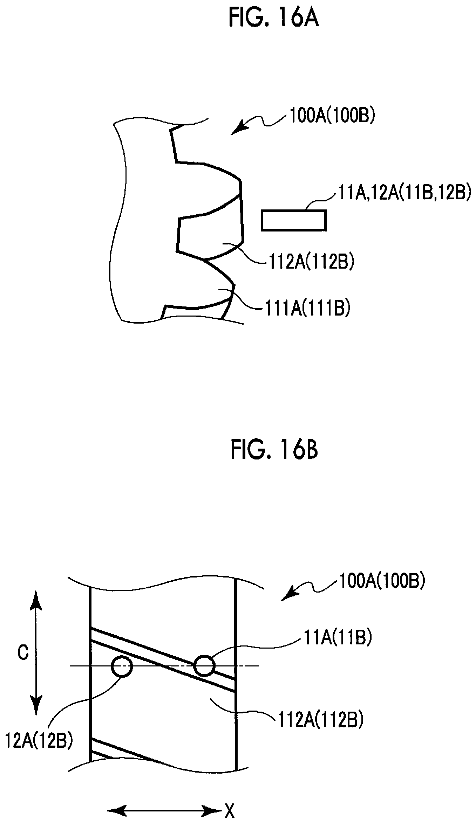

Besides, as a second additional aspect of the aforementioned embodiment of the invention, as shown in FIGS. 16A and 16B, in the case of, for example, a helical gear that is shaped such that the meshing teeth 111 of the gear 100 are extended in a diagonal direction that intersects with the axial direction X of the rotary shaft 101, the magnetic sensors 11 and 12 may be arranged at positions that are successive to each other on a straight line parallel to the axial direction X of the rotary shaft 101. In this case as well, an operation and effect similar to those of the aforementioned embodiment of the invention can be obtained.

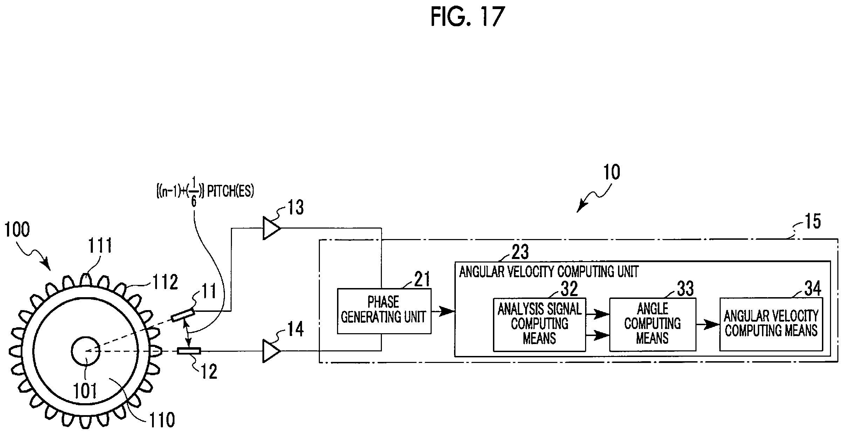

Furthermore, as a third additional aspect of the aforementioned embodiment of the invention, the tooth flank shape of the gear 100 is formed in such a manner as to include outer surfaces of the uniformly shaped meshing teeth 111 and to be successive in the circumferential direction, so the sensor signals that are output by the magnetic sensors 11 and 12 also assume a phase waveform on the cycle of the tooth flank shape including the meshing teeth 111. Thus, as shown in FIG. 17, the magnetic sensors 11 and 12 may be arranged in an offset manner with respect to the meshing teeth 111, for example, at shift positions that are offset from the meshing teeth 111 by one or more teeth in the circumferential direction. That is, the magnetic sensors 11 and 12 may be arranged at shift positions that are offset from each other by $\{(n-1)+(1/6)\}$ pitch in the circumferential direction of the gear 100, when n denotes a natural number. In other words, the magnetic sensors 11 and 12 may be arranged at shift positions that are offset from each other by $\{(2\pi(n-1)+(\pi/3)\}$ phases in the phase waveforms of the sensor signals. In this case as well, an operation and effect similar to those of the aforementioned embodiment of the invention can be obtained.

Besides, in the aforementioned embodiment of the invention, the example in which the magnetic sensors 11 and 12 are laid out such that the third-order harmonic components included in the sensor signals can be canceled has been described, but the invention is not limited thereto. A plurality of magnetic sensors may be used. For example, magnetic sensors are additionally installed also at such positions that harmonic components of other orders can be cancelled from sensor signals thereof.

Furthermore, in the aforementioned embodiment of the invention, the example in which the magnetic sensors 11 and 12 are adopted as noncontact sensors has been described, but the invention is not limited thereto. A similar operation and a similar effect can also be obtained by, for example, installing optical sensors capable of detecting the tooth flank shape of the gear instead of the magnetic sensors and synthesizing sensor signals of the optical sensors with each other. Incidentally, in the case where the angular velocity measuring device is mounted in a real machine, the use of the magnetic sensors as in the aforementioned embodiment of the invention is advantageous due to problems such as the space for installation, dirt and the like.

Although the embodiments of the invention have been disclosed, it is obvious that those skilled in the art can alter the embodiments of the invention without departing from the scope thereof. The following claims of the invention are intended to encompass all such modifications and equivalents.

**Claims**

1. An angular velocity measuring device (10) that is configured to measure an angular velocity of a gear (100) that is fixed to a rotary shaft (101), comprising:

   a pair of a first noncontact sensor (11) and a second noncontact sensor (12) that are configured to be arranged at positions facing a tooth flank (112) of the gear (100) and to detect a shape of the tooth flank in a noncontact manner; and
   a computation unit (15) that is configured to generate a waveform of a phase obtained by synthesizing output detection signals of the first noncontact sensor (11) and the second noncontact sensor (12), output an output waveform, and calculate the angular velocity of the gear (100) from the output waveform, wherein
   the first noncontact sensor (11) and the second noncontact sensor (12) are arranged such that the output detection signals are offset from each other by {(n-1)+(1/6)} pitches when one pitch is defined as one cycle of the shape of the tooth flank in the circumferential direction of the gear (100) and n denotes a natural number.

2. The angular velocity measuring device (10) according to claim 1, wherein
   the gear (100) is configured as an involute gear.

3. The angular velocity measuring device (10) according to claim 1 or 2, wherein
   the first noncontact sensor (11) and the second noncontact sensor (12) are configured as magnetic sensors.

4. The angular velocity measuring device (10) according to claim 3, wherein
   the magnetic sensors are configured as eddy-current sensors, and
   the first noncontact sensor (11) and the second noncontact sensor (12) are configured to be operated at different oscillating frequencies.

5. The angular velocity measuring device (10) according to any one of claims 1 to 4, wherein
   the first noncontact sensor (11) and the second noncontact sensor (12) are arranged at positions that are offset from each other in a circumferential direction of the gear (100).

6. The angular velocity measuring device (10) according to claim5, wherein
   the first noncontact sensor (11) and the second noncontact sensor (12) are arranged at positions that are offset from each other in a tooth width direction of the gear (100).

7. The angular velocity measuring device (10) according to any one of claims 1 to 4, wherein
   the first noncontact sensor (11) and the second noncontact sensor (12) are arranged at positions that are offset from each other in a tooth width direction of the gear (100) and on a straight line parallel to an axial direction of the rotary shaft (101) in a case where the gear (100) is a helical gear.

8. A relative angular velocity measuring device (50) that is equipped with at least two angular velocity measuring devices (10) according to any one of claims 1 to 7, comprising:

   a relative angular velocity computing unit (25) that is configured to measure angular velocities of a pair of the gears meshing with each other as measured by the angular velocity measuring devices (10) respectively, and calculate a relative angular velocity between the gears.

FIG. 1

# FIG. 2

## FIG. 3A

## FIG. 3B

IDEAL WAVEFORM
(SINUSOIDAL WAVEFORM)

MEASURED WAVEFORM

# FIG. 4A

# FIG. 4B

IDEAL WAVEFORM
(SINUSOIDAL WAVEFORM)

MEASURED WAVEFORM

π/3 ADVANCEMENT

SYNTHETIC WAVE

FIG. 5A

BASE WAVEFORM

FIG. 5B

SHIFT WAVEFORM

FIG. 5C

SYNTHETIC WAVEFORM

FIG. 6A

FIG. 6B

EP 3 301 455 A2

FIG. 7A

FIG. 7B

20

FIG. 8A

FIG. 8B

TORQUE INVERSION
(TOOTH HAMMERING)

FIG. 9

FIG. 10

FIG. 11

# FIG. 12

FIG. 13A

TIME

FIG. 13B

TIME

FIG. 13C

TIME

## FIG. 14

EP 3 301 455 A2

## FIG. 15A

100A(100B)
11A(11B)
12A(12B)
112A(112B)
111A(111B)

## FIG. 15B

C
11A(11B)
12A(12B)
112A(112B)
100A(100B)
X

## FIG. 15C

C
100A(100B)
11A(11B)
12A(12B)
112A(112B)
W(X)

## FIG. 16A

100A(100B)

11A,12A(11B,12B)

112A(112B)

111A(111B)

## FIG. 16B

100A(100B)

C

11A(11B)

12A(12B)

112A(112B)

X

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 3016656 A

- JP 3016656 B